# FASCICULE DE BREVET EUROPEEN

(11) **EP 3 936 587 B1**
(45) Date de publication et mention de la délivrance du brevet: **02.04.2025**
(21) Numéro de dépôt: 21181420.7
(22) Date de dépôt: 24.06.2021
(51) Int. Cl.: C10G 7/00, C10G 49/00, C10G 65/02, C10G 67/02, C10G 3/00, C10G 65/04

(54) **PROCÉDÉ D'HYDRORAFFINAGE DE MATIÈRES PREMIÈRES BIOLOGIQUES**
HYDRORAFFINIERUNGSVERFAHREN FÜR BIOLOGISCHE ROHSTOFFE
METHOD FOR HYDROPROCESSING OF BIOLOGICAL RAW MATERIALS

(30) Priorité: 08.07.2020 US 202016923152
(43) Date de publication de la demande: 12.01.2022
(73) Titulaire: Axens, 92500 Rueil Malmaison (FR)
(72) Inventeur: DEBONIS, Dominic, 92500 RUEIL-MALMAISON (FR)
(74) Mandataire: IFP Energies nouvelles

(56) Documents cités:
- US-A1- 2012 151 828
- US-A1- 2018 079 967

## Description

### DOMAINE DE L'INVENTION

L'invention concerne un appareil amélioré et des procédés de gestion et d'utilisation de fractions légères, à savoir le propane, générées pendant l'hydroraffinage de matières premières biologiques dans la fabrication de carburants à base de distillats moyens.

### ART ANTÉRIEUR

Ces dernières années ont été marquées par la croissance rapide de la demande en carburants, en particulier en carburants à base diesel dans la Communauté européenne, ainsi que par l'importance des problèmes liés au réchauffement climatique et à l'émission de gaz à effet de serre. Il en résulte un souhait de réduire la dépendance énergétique aux matières premières à base fossile ainsi que les émissions de CO₂.

Dans ce contexte, la recherche de nouveaux procédés de fabrication de carburants à partir de sources renouvelables, facilement intégrables au schéma traditionnel de raffinage et de production de carburants constitue une question d'importance croissante. Ainsi, l'intégration au processus de raffinage de nouveaux produits d'origine biologique, résultant de la conversion de biomasse lignocellulosique ou de la production d'huiles végétales ou de matières grasses animales, a fait l'objet ces dernières années d'un intérêt croissant du fait du coût de plus en plus important des carburants fossiles. L'invention du demandeur se concentre sur ce dernier point, la production courante de biocarburants à partir des sous-produits d'huiles végétales et de matières grasses animales. Pour une large vue d'ensemble des technologies diesel vertes et des catalyseurs qui y sont utilisés, se référer à « Green Diesel: Biomass Feedstocks, Production Technologies, Catalytic Research, Fuel Properties and Performance in Compression Ignition Internal Combustion Engines » par Douvartzides S., Charisiou N., Papageridis K. et Goula M. Energies 2019, 12, 809 qui est incorporé à la présente demande pour référence.

De plus, les processus connus à l'heure actuelle qui utilisent des huiles végétales ou des matières grasses animales consomment beaucoup de ressources et produisent du CO₂, connu pour ses effets négatifs sur l'environnement. Un processus mieux intégré pour la production de ces biocarburants constituerait donc un avantage significatif.

La production de bases de carburant est ainsi de plus en plus reconnue comme un nouveau débouché attractif pour le secteur agricole, en particulier pour les producteurs d'huiles végétales qui broient des graines oléagineuses comme les graines de colza, de soja ou de tournesol. Il se trouve que ces huiles végétales sont constituées d'acides gras sous la forme de triglycérides comportant des chaînes alkyliques longues dont la structure correspond aux paraffines normales des fractions de gasoil et de kérosène (longueur de chaîne de 12 à 24 atomes de carbone, en fonction de la nature de l'huile végétale). Incompatibles avec les moteurs diesel modernes dans leur état normal, ces huiles végétales doivent être transformées avant utilisation.

Deux voies chimiques de conversion de ces matières premières biologiques en des carburants à base de distillats moyens sont couramment employées : la transestérification et l'hydroraffinage.

La réaction de transestérification utilise un alcool tel que le méthanol pour obtenir des esters méthyliques d'huile végétale (EMHV) couramment désignés par le terme de biodiesel. Cette voie est aujourd'hui largement utilisée en Europe dans la mesure où la production d'EMHV a augmenté de façon spectaculaire au cours des dix dernières années, atteignant 1,5 Mt en 2003 (le taux de croissance annuel moyen était de 35 % entre 1992 et 2003). Cette production est en particulier soutenue par la directive européenne visant à promouvoir l'utilisation de biocarburants (2003/30/CE), qui définit des objectifs croissants de consommation de biocarburants dans le secteur des transports. Ces consommations devaient représenter au moins 2 % en 2005, 5,75 % en 2010 et 8 % en 2015 (pourcentages mesurés en énergie) par rapport à la consommation globale d'essence et de diesel dans les transports. Cependant, ce type de processus est relativement onéreux et nécessite de limiter le type d'huiles végétales pour correspondre aux spécifications du biodiesel. De plus, les charges de ce type de processus doivent être sélectionnées avec soin, ce qui implique qu'un certain nombre d'huiles végétales ne peuvent pas être traitées de cette façon. Enfin, les propriétés de fluidité à froid de ces produits constituent également un facteur limitant.

Comme mentionné ci-dessus, l'approche hydroraffinage consiste en l'exploitation directe d'huiles végétales via leur transformation en dérivés d'acides gras élémentaires, au moyen de processus d'hydrotraitement ou d'hydroconversion dont les catalyseurs sont bien connus de l'homme du métier pour leurs propriétés d'hydrodésoxygénation. (voir par exemple E. Laurent, Delmon B., Catal.App., 1994, Vol. 109, issue 1, p.77 - 97 et « Sunflower oil to green diesel over Raney-type Ni-catalyst » par Onyestyak G., Harnow S., Szegedi A. et Kallo D, tous deux incorporés à la présente demande pour référence.

L'hydroraffinage a été utilisé plus fréquemment dans des applications commerciales grâce à sa capacité à produire des produits hydrocarbonés avec une meilleure stabilité et une plus grande facilité de mélange avec des hydrocarbures dérivés d'huile minérale. Dans ce cas, les triglycérides sont convertis en dérivés principalement paraffiniques et saturés, ce qui constitue d'excellentes bases hydrocarbonées pour les mélanges de carburants diesel du fait de leurs bons indices de cétane.

Dans une configuration d'installation de production de diesel renouvelable typique, l'hydrogène d'une installation de production d'hydrogène est introduit avec une matière première biologique prétraitée pour l'hydroraffinage, qui inclut une étape d'hydrotraitement et une étape d'isomérisation.

Par exemple, la demande de brevet US2012/0151828 A1 décrit un procédé d'hydrotraitement capable de traiter conjointement des matières premières biologiques de nature différente, telles qu'un un composant contenant un acide gras ou un triglycéride et un composant riche en paraffines.

La matière première biologique doit généralement être prétraitée car les contaminants, qui contribuent à la présence de traces d'éléments dans les matières grasses animales et/ou les huiles végétales, entravent la capacité de conversion catalytique de ces matières premières en hydrocarbures pendant l'hydroraffinage. Par exemple, certains éléments et composés contenant ces éléments (par exemple le phosphore, des composés phosphorés et des métaux tels que le calcium et le magnésium) empoisonnent ou réduisent l'activité des catalyseurs d'hydroraffinage, réduisant ainsi leur durée de vie utile et augmentant par conséquent le coût global de la production de biocarburants. Les procédés de traitement visant à réduire certains contaminants du composant contenant les acides gras ou les triglycérides (et donc les contaminants de la matière première) autant que possible confèrent donc des avantages commerciaux importants dans l'hydroraffinage de matières premières biologiques en produits à base de distillats moyens. Un large éventail de schémas de prétraitement différents a été décrit, chacun offrant divers avantages et désavantages.

Ainsi, la demande de brevet US2018/079967 A1 concerne un procédé de transformation d'une raffinerie conventionnelle d'huiles minérales en bioraffinerie, permettant le traitement des matières premières biologiques pour la production de biocarburants, principalement du biodiesel. Pour ce faire, les deux catalyseurs d'hydrodésulfuration de l'installation initiale sont remplacés par un catalyseur d'hydrodésoxygénation et un catalyseur d'isomérisation dans la bioraffinerie.

L'hydrotraitement de triglycérides inclut plusieurs réactions différentes. Dans la première réaction, de l'hydrogène est ajouté pour saturer les doubles liaisons des triglycérides d'huile végétale insaturés. Dans la deuxième réaction, de l'hydrogène est ajouté pour éliminer le squelette propane, convertissant ainsi les triglycérides d'huile végétale saturés en acides gras. Enfin, les acides gras subissent soit une hydrodésoxygénation (par ajout d'une quantité supplémentaire d'hydrogène, l'oxygène s'échappe sous forme de H₂O), soit une décarboxylation (l'oxygène s'échappe sous forme de CO₂ sans ajout supplémentaire d'hydrogène), soit une combinaison des deux. Il en résulte un mélange d'hydrocarbures paraffiniques à chaîne linéaire. Le schéma réactionnel du processus d'hydrotraitement est illustré ci-dessous.

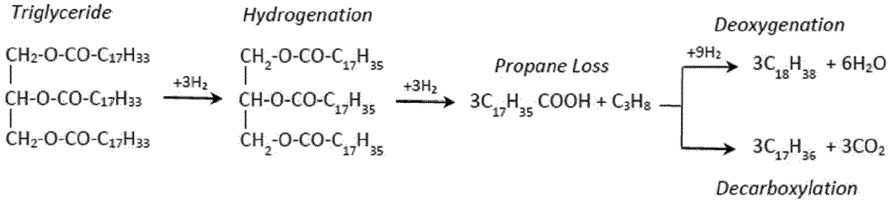

L'étape d'isomérisation des alcanes et de craquage amène ensuite le biocarburant jusqu'à une qualité égale ou supérieure aux spécifications des carburants à base de pétrole classiques.

L'effluent de la section d'hydroraffinage est ensuite traité pour séparer les composants allégés de la partie liquide de l'effluent. Ceci peut être accompli de plusieurs façons, y compris l'envoi vers une colonne de désorption dans laquelle un ou plusieurs composants sont retirés d'un courant liquide par un courant de vapeur de désorption, souvent de la vapeur d'eau surchauffée, pour obtenir le carburant hydrocarboné. De façon alternative, l'effluent peut être envoyé vers une colonne de distillation par rebouillage pour séparer les fractions légères.

Dans la colonne de distillation dans laquelle les fractions légères sont séparées ou dans une colonne de distillation distincte, il est également courant de séparer l'effluent liquide en produits liquides distincts ; ces produits liquides peuvent souvent inclure un produit de type naphta, un produit de type kérosène et/ou un produit de type diesel ou gasoil.

La présente invention se concentre sur l'interaction entre la zone d'hydroraffinage et la section d'installation de production d'hydrogène. La section d'hydrotraitement crée plusieurs sous-produits ; certains sous-produits tels que l'eau résultent des réactions d'hydrotraitement et certaines fractions légères sont produites au moyen d'un léger craquage se produisant au titre de réaction secondaire. L'un des principaux sous-produits de l'hydrotraitement des triglycérides est le propane. La gestion du propane constitue donc une question importante. Lorsque l'effluent de réacteur est séparé en vapeur et en liquide, le propane doit être éliminé de la boucle d'hydrotraitement. En cas d'élimination inadéquate, le propane s'accumule dans le gaz de recyclage, diluant l'hydrogène envoyé vers le réacteur d'hydrotraitement et diminuant sa pureté.

Dans l'état actuel de l'art, il existe deux façons courantes de libérer le propane. La première décharge de propane est souvent une purge de vapeur à pression élevée à partir de la boucle d'hydrotraitement ; ceci peut être utile pour envoyer le propane vers l'installation de production d'hydrogène ou pour la purification. Cependant, le courant de purge contient une concentration élevée en hydrogène gazeux, qui est précieux, ce qui peut complexifier ou surdimensionner la destination du courant de purge. La seconde décharge de propane est souvent une évacuation à pression faible depuis une colonne retirant les fractions légères de l'effluent d'hydrotraitement liquide ; ce procédé utilise souvent le propane comme carburant de faible valeur ou requiert une compression significative pour envoyer le propane vers une autre destination. Le propane généré par les réactions d'hydrotraitement l'est souvent dans une quantité trop grande pour être utilisé comme combustible pour le fonctionnement de l'installation de production d'hydrogène, et il arrive donc que le propane soit brûlé en vain, sans générer de valeur. À la lumière de ce qui précède, il existe un besoin d'un schéma de transformation qui gère et utilise de façon plus efficiente et efficace le propane généré par l'hydroraffinage de matières premières biologiques dans la fabrication de distillats moyens.

La présente invention a donc pour objet la création d'un procédé d'utilisation efficiente et efficace des courants de fractions légères en conjonction avec l'hydroraffinage de matières premières biologiques comprenant :
a) l'introduction d'une matière première biologique prétraitée et d'un courant d'hydrogène dans une zone d'hydroraffinage qui utilise au moins un catalyseur solide pour catalyser des réactions d'hydrotraitement et produire un effluent liquide d'hydroraffinage ;
b) l'introduction dudit effluent liquide d'hydroraffinage et d'un fluide de désorption d'hydrocarbures légers dans une zone de récupération de fractions légères, ledit fluide de désorption d'hydrocarbures légers étant mis en contact avec ledit effluent liquide d'hydroraffinage pour créer un courant de fractions légères récupérées et un courant d'effluent liquide dont les gaz ont été désorbés ; et
c) l'introduction dudit courant de fractions légères récupérées dans une zone de production d'hydrogène, ladite zone de production d'hydrogène utilisant les hydrocarbures présents dans ledit courant de fractions légères récupérées comme matière première pour créer une partie dudit courant d'hydrogène utilisé dans l'étape (a).

La présente invention a pour objet la création d'un procédé d'utilisation efficiente et efficace des courants de fractions légères en conjonction avec l'hydroraffinage de matières premières biologiques comprenant :
a) l'introduction d'une matière première biologique prétraitée et d'un courant d'hydrogène dans une zone d'hydroraffinage qui utilise au moins un catalyseur solide pour catalyser des réactions d'hydrotraitement et produire un effluent liquide d'hydroraffinage ;
b) l'introduction dudit effluent liquide d'hydroraffinage et d'un fluide de désorption d'hydrocarbures légers dans une zone de récupération de fractions légères, ledit fluide de désorption d'hydrocarbures légers étant mis en contact avec ledit effluent liquide d'hydroraffinage pour créer un courant de fractions légères récupérées et un courant d'effluent liquide dont les gaz ont été désorbés ;
c) l'introduction dudit courant d'effluent liquide dont les gaz ont été désorbés dans une zone d'hydroraffinage secondaire qui utilise au moins un catalyseur solide secondaire pour catalyser des réactions d'hydroraffinage supplémentaires pour produire un effluent liquide d'hydroraffinage secondaire ;
d) l'introduction dudit courant de fractions légères récupérées dans une zone de production d'hydrogène, ladite zone de production d'hydrogène utilisant les hydrocarbures présents dans ledit courant de fractions légères récupérées comme matière première pour créer un courant d'effluent vapeur riche en hydrogène ;
e) l'introduction dudit courant d'effluent vapeur riche en hydrogène dans ladite zone d'hydroraffinage secondaire ; et
dans lequel l'hydrogène en excès issu de ladite zone d'hydroraffinage secondaire est ensuite introduit en cascade dans ladite zone d'hydroraffinage.

### SOMMAIRE DE L'INVENTION

La présente invention concerne un procédé d'utilisation efficiente et efficace de courants de fractions légères pendant le processus de conversion de matières premières biologiques en carburants hydrocarbonés à base de distillats moyens.

Dans un mode de réalisation, l'invention concerne un procédé d'hydroraffinage de matières premières biologiques comprenant :
a) l'introduction d'une matière première biologique prétraitée et d'un courant d'hydrogène dans une zone d'hydroraffinage qui utilise au moins un catalyseur solide pour catalyser des réactions d'hydrotraitement et produire un effluent liquide d'hydroraffinage ;
b) l'introduction dudit effluent liquide d'hydroraffinage et d'un fluide de désorption d'hydrocarbures légers dans une zone de récupération de fractions légères, ledit fluide de désorption d'hydrocarbures légers étant mis en contact avec ledit effluent liquide d'hydroraffinage pour créer un courant de fractions légères récupérées et un courant d'effluent liquide dont les gaz ont été désorbés ; et
c) l'introduction dudit courant de fractions légères récupérées dans une zone de production d'hydrogène, ladite zone de production d'hydrogène utilisant les hydrocarbures présents dans ledit courant de fractions légères récupérées comme matière première pour créer au moins une partie dudit courant d'hydrogène utilisé dans l'étape (a).

Dans ce mode de réalisation, l'invention concerne un procédé d'hydroraffinage de matières premières biologiques comprenant :
a) l'introduction d'une matière première biologique prétraitée et d'un courant d'hydrogène dans une zone d'hydroraffinage qui utilise au moins un catalyseur solide pour catalyser des réactions d'hydrotraitement et produire un effluent liquide d'hydroraffinage ;
b) l'introduction dudit effluent liquide d'hydroraffinage et d'un fluide de désorption d'hydrocarbures légers dans une zone de récupération de fractions légères, ledit fluide de désorption d'hydrocarbures légers étant mis en contact avec ledit effluent liquide d'hydroraffinage pour créer un courant de fractions légères récupérées et un courant d'effluent liquide dont les gaz ont été désorbés ;
c) l'introduction dudit courant d'effluent liquide dont les gaz ont été désorbés dans une zone d'hydroraffinage secondaire qui utilise au moins un catalyseur solide secondaire pour catalyser des réactions d'hydroraffinage supplémentaires pour produire un effluent liquide d'hydroraffinage secondaire ;
d) l'introduction dudit courant de fractions légères récupérées dans une zone de production d'hydrogène, ladite zone de production d'hydrogène utilisant les hydrocarbures présents dans ledit courant de fractions légères récupérées comme matière première pour créer un courant d'effluent vapeur riche en hydrogène ;
e) l'introduction dudit courant d'effluent vapeur riche en hydrogène dans ladite zone d'hydroraffinage secondaire ; et
dans lequel l'hydrogène en excès issu de ladite zone d'hydroraffinage secondaire est ensuite introduit en cascade dans ladite zone d'hydroraffinage.

Le procédé selon l'invention peut être conçu de sorte que ledit courant d'effluent liquide dont les gaz ont été désorbés est ensuite transformé plus avant pour la fabrication de carburants hydrocarbonés à base de distillats moyens à l'aide d'un ou plusieurs procédés choisis dans le groupe constitué par l'élimination des gaz dissous, le fractionnement du produit liquide, une étape de réaction d'isomérisation et/ou une étape de réaction d'hydrocraquage.

Le procédé selon l'invention peut être conçu de sorte que le courant d'effluent liquide dont les gaz ont été désorbés est ensuite transformé plus avant pour la fabrication de carburants hydrocarbonés à base de distillats moyens à l'aide d'une étape d'isomérisation, ladite étape d'isomérisation créant un courant d'effluent vapeur riche en hydrogène et ledit effluent vapeur riche en hydrogène étant ensuite introduit en retour en cascade dans ladite zone d'hydroraffinage.

Le procédé selon l'invention peut être conçu de sorte que le courant d'effluent liquide dont les gaz ont été désorbés est ensuite transformé plus avant pour la fabrication de carburants hydrocarbonés à base de distillats moyens à l'aide d'une étape d'hydrocraquage, ladite étape d'hydrocraquage créant un courant d'effluent vapeur riche en hydrogène et ledit effluent vapeur riche en hydrogène étant ensuite introduit en retour en cascade dans ladite zone d'hydroraffinage.

Dans le procédé selon l'invention, la zone d'hydroraffinage et/ou la zone d'hydroraffinage secondaire peuvent fonctionner à une température comprises entre 145 °C et 400 °C, une pression comprise entre 10 bar et 150 bar et une VSHL comprise entre 0,1 et 10 h⁻¹.

Dans le procédé selon l'invention, le catalyseur solide peut comprendre une fonction d'hydrodésoxygénation comprenant au moins un métal du groupe VIII choisi parmi le cobalt et le nickel, au moins un métal du groupe VIB choisi parmi le molybdène et le tungstène ou un mélange d'au moins un métal du groupe VIII choisi parmi le cobalt et le nickel et d'au moins un métal du groupe VIB choisi parmi le molybdène et le tungstène, sur un support comprenant de l'alumine, de la silice, de la silice-alumine, de la magnésie, des argiles ou un mélange d'au moins deux de ces minéraux.

Selon l'invention, la zone de récupération de fractions légères peut fonctionner à une pression supérieure à 5 bars.

Dans le procédé selon l'invention, ladite zone d'hydroraffinage de l'étape a) peut produire un effluent vapeur, et ledit effluent vapeur peut être séparé plus avant en un courant enrichi en hydrocarbures et un courant enrichi en hydrogène, par exemple à l'aide d'une membrane ; et ledit courant enrichi en hydrocarbures peut ensuite être mélangé audit courant de fractions légères récupérées, et ledit courant enrichi en hydrogène et le mélange dudit courant enrichi en hydrocarbures et dudit courant de fractions légères récupérées peuvent être envoyés séparément vers ladite zone de production d'hydrogène.

Dans le procédé selon l'invention, une partie dudit courant d'hydrogène créé à l'étape c) ou d) peut être utilisé dans l'hydroraffinage à l'extérieur de ladite zone d'hydroraffinage.

Dans le procédé selon l'invention, au moins une partie dudit hydrogène issu de ladite zone de production d'hydrogène peut être envoyée vers une étape d'isomérisation avant d'introduire en cascade l'hydrogène en excès dans la zone d'hydroraffinage, et l'effluent liquide dont les gaz ont été désorbés peut être transformé plus avant dans ladite étape d'isomérisation pour la fabrication de carburants hydrocarbonés à base de distillats moyens.

Dans le procédé selon l'invention, le fluide de désorption d'hydrocarbures légers peut être un courant comprenant du méthane, de l'éthane, du gaz naturel, du gaz combustible, un produit léger de déséthaniseur, un produit léger de déméthaniseur, un courant obtenu à partir d'une autre source renouvelable, comme par exemple un gaz léger issu d'une unité de pyrolyse de biomasse ou d'une unité de digestion de gaz ou d'une unité de pyrolyse de déchets et/ou de plastiques ou **de toute autre** unité de transformation d'une matière première renouvelable, ou des mélanges de ceux-ci.

Dans le procédé selon l'invention, ladite zone d'hydroraffinage peut inclure une étape d'hydrotraitement et une étape d'isomérisation et/ou ladite zone d'hydroraffinage secondaire peut inclure une étape d'isomérisation.

Dans le procédé selon l'invention, ladite zone d'hydroraffinage peut inclure une étape d'hydrotraitement et une étape d'isomérisation, et/ou ladite zone d'hydroraffinage secondaire inclut une étape d'isomérisation, et ladite étape d'isomérisation peut utiliser au moins un catalyseur d'isomérisation solide qui est différent dudit catalyseur solide.

Dans le cas où le procédé selon l'invention inclut l'étape d'isomérisation susmentionnée, le catalyseur d'isomérisation solide qui peut être utilisé comprend notamment une fonction d'isomérisation comprenant au moins un métal choisi parmi le palladium (Pd) et le platine (Pt), et un support comprenant de la zéolithe, de l'alumine, de la silice, de la silice-alumine, de la magnésie, des argiles.

Dans le cas où le procédé selon l'invention inclut l'étape d'isomérisation susmentionnée, le catalyseur d'isomérisation solide qui peut être utilisé comprend notamment une fonction d'isomérisation comprenant un mélange d'au moins deux de ces minéraux ou d'au moins un métal du groupe VIB choisi parmi le molybdène et le tungstène, au moins un métal du groupe VIII choisi parmi le nickel et le cobalt ou une combinaison d'au moins un métal du groupe VIB choisi parmi le molybdène et le tungstène et d'au moins un métal du groupe VIII choisi parmi le nickel et le cobalt, sur un support comprenant de la zéolithe, de l'alumine, de la silice, de la silice-alumine, de la magnésie, des argiles et des mélanges d'au moins de deux de ces minéraux.

Dans le procédé selon l'invention, la zone d'hydroraffinage et/ou la zone d'hydroraffinage secondaire peuvent inclure une étape d'hydrotraitement et une étape d'isomérisation, et ladite étape d'isomérisation fonctionne préférentiellement à une VSHL comprise entre 0,1 et 10 h⁻¹.

Dans le procédé selon l'invention, ladite zone d'hydroraffinage peut inclure une étape d'hydrotraitement et une étape d'isomérisation et il peut y avoir une étape de séparation inter-étage entre ladite étape d'hydrotraitement et ladite étape d'isomérisation, les gaz légers étant séparés desdits carburants hydrocarbonés à base de distillats moyens.

Le courant de fractions légères récupérées peut être mélangé à un courant d'alimentation supplémentaire avant l'introduction dans ladite zone de production d'hydrogène.

Le courant de fractions légères récupérées peut être mélangé à un courant d'alimentation supplémentaire avant l'introduction dans ladite zone de production d'hydrogène, et soit ledit courant d'alimentation supplémentaire peut être fourni depuis la même source que celle qui fournit ledit fluide de désorption d'hydrocarbures légers, soit ledit courant d'alimentation supplémentaire peut être fourni depuis une source différente de celle qui fournit ledit fluide de désorption d'hydrocarbures légers.

Selon l'invention, la zone de récupération de fractions légères peut en outre comprendre une étape d'absorption par amines pour éliminer les gaz acides.

Selon l'invention, ladite zone de récupération de fractions légères peut en outre comprendre un adsorbant pour éliminer les composants tels que H₂O, H₂S, CO₂, les hydrocarbures soufrés légers, ou n'importe laquelle de leurs combinaisons.

Selon l'invention, la matière première biologique peut être choisie dans le groupe comprenant : l'huile de colza, l'huile de soja, l'huile de maïs, l'huile de noix de coco, l'huile d'olive, l'huile de lin, l'huile de tournesol, l'huile de palme, l'huile de jatropha, l'huile de moutarde, l'huile d'arachide, l'huile de chanvre, l'huile de coton, la matière grasse de porc, la matière grasse de volaille, le saindoux, le beurre, le suif, ou n'importe laquelle de leurs combinaisons.

Notamment le courant d'effluent liquide d'hydroraffinage secondaire peut être ensuite transformé plus avant pour la fabrication de carburants hydrocarbonés à base de distillats moyens à l'aide d'un ou de plusieurs procédés choisis dans le groupe constitué par l'élimination des gaz dissous et/ou le fractionnement du produit liquide.

Notamment ladite zone de récupération de fractions légères peut inclure une étape d'élimination des gaz dissous, les gaz légers étant séparés desdits carburants hydrocarbonés à base de distillats moyens après la mise en contact de l'effluent liquide d'hydroraffinage avec le fluide de désorption d'hydrocarbures légers.

Selon l'invention, ladite matière première biologique peut être un mélange ou un courant d'alimentation combiné avec une matière première à base d'hydrocarbures de pétrole, et la matière première à base d'hydrocarbures de pétrole peut être co-transformée avec ladite matière première biologique. Éventuellement, la matière première à base d'hydrocarbures de pétrole est choisie dans le groupe comprenant la LCO (huile légère de recyclage), le diesel, le kérosène, la HCGO, la LCGO, la VGO ou l'huile de pyrolyse ou n'importe laquelle de leurs combinaisons.

### BREVE DESCRIPTION DES DESSINS

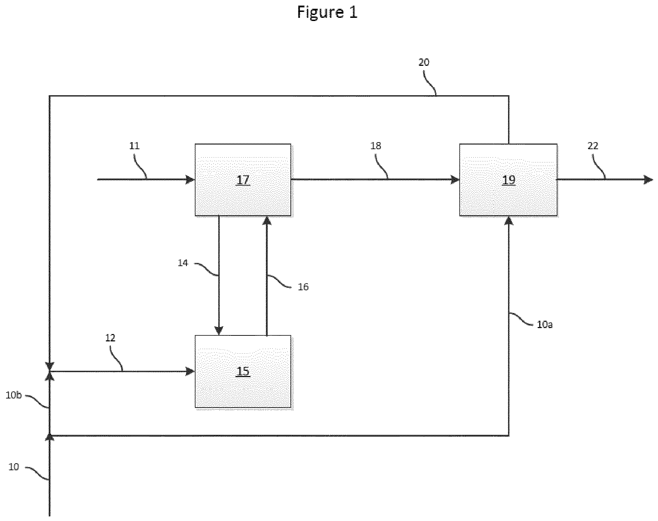

La Figure 1 présente un schéma du nouveau procédé du demandeur pour l'utilisation efficiente et efficace des courants de fractions légères pendant le procédé de conversion de matières premières biologiques en hydrocarbures dans la gamme des distillats moyens.

### DESCRIPTION DÉTAILLÉE DE L'INVENTION

La Figure 1 présente un schéma du nouveau procédé du demandeur pour l'utilisation efficiente et efficace de courants de fractions légères pendant le processus de conversion de matières premières biologiques en carburants à base d'hydrocarbures dans la gamme des distillats moyens.

Tel qu'employé dans la présente invention, « hydrotraiter » ou « hydrotraitement » désigne des réactions chimiques entre la matière première hydrocarbonée et l'hydrogène, y compris l'hydrodénitrification, l'hydrodésulfuration, l'hydrodésoxygénation, l'hydrogénolyse, la saturation des alcènes et la saturation des oléfines ; ce terme sera également utilisé dans la présente invention pour inclure la décarboxylation et la décarbonylation, dans la mesure où ces réactions se produisent simultanément et en compétition avec l'hydrogénolyse dans les conditions de réaction données.

Tel qu'employée dans la présente invention, une « zone d'hydroraffinage » désigne une zone dans laquelle les réactions d'hydrotraitement et/ou d'hydroraffinage se produisent entre la matière première hydrocarbonée et l'hydrogène lors de la mise en contact avec le lit catalytique. La zone d'hydroraffinage peut également inclure, en plus du ou des lits catalytiques, une ou plusieurs des suivantes : la séparation du ou des courants liquides et du ou des courants vapeur en aval du ou des lits catalytiques, une boucle de recyclage de gaz, une ou plusieurs boucles de recyclage de liquide, une séparation par amines pour l'élimination du sulfure d'hydrogène et/ou du dioxyde de carbone. En outre, la zone d'hydroraffinage peut également inclure une étape d'isomérisation et/ou d'hydrocraquage avec différents catalyseurs pour faciliter l'isomérisation/l'hydrocraquage des hydrocarbures paraffiniques.

Tel qu'employé dans la présente invention, « distillats moyens » désigne les carburants hydrocarbonés comprenant généralement principalement des composants hydrocarbonés de température d'ébullition supérieure à 150 °C, ce qui inclut par exemple le kérosène, le diesel ou le gasoil.

Tel qu'employé dans la présente invention, « matières premières biologiques » désigne les huiles végétales, les matières grasses animales, l'huile de tall et les matières dérivées telles que les esters alkyliques d'acides gras ou leurs combinaisons. Les huiles végétales incluent sans y être limitées l'huile de colza, l'huile de soja, l'huile de maïs, l'huile de noix de coco, l'huile d'olive, l'huile de lin, l'huile de tournesol, l'huile de palme, l'huile de jatropha, l'huile de moutarde, l'huile d'arachide, l'huile de chanvre et l'huile de coton. Les matières grasses animales incluent sans y être limitées la matière grasse de porc, la matière grasse de volaille, le saindoux, le beurre et le suif.

Tel qu'employé dans la présente invention, le terme « fractions légères » ou « hydrocarbures légers » désigne des composés chimiques plus légers que le pentane, ce qui inclut le méthane, l'éthane, le propane, le n-butane ou l'isobutane. De tels hydrocarbures légers ou « fractions légères » sont souvent utilisés dans certains schémas de transformation d'hydrocarbures en tant que matières premières et/ou en tant que combustible.

Telle qu'employée dans la présente invention, la VSHL est la vitesse spatiale horaire du liquide, qui est le rapport du débit de volume de liquide par heure au volume de catalyseur. Un système présentant un débit de 2 m³/h et 1 m³ de catalyseur aura une VSHL de 2 (les unités sont 1/h). La VSHL est inversement proportionnelle au temps de résidence.

Un courant de matière première biologique prétraitée 11 est introduit en même temps qu'un courant d'hydrogène 16 depuis une zone de production d'hydrogène 15 vers la zone d'hydroraffinage 17. La zone de production d'hydrogène 15 est généralement une section dans laquelle le courant d'alimentation en hydrocarbures est utilisé pour produire chimiquement de l'hydrogène gazeux.

Bien que cela ne soit pas illustré, le courant de matière première biologique prétraitée peut être transformé avec un autre courant compatible, en particulier un courant d'alimentation d'origine pétrolière, comme la LCO (huile légère de recyclage), le diesel, le kérosène, la HCGO, la LCGO, la VGO ou l'huile de pyrolyse, ou n'importe laquelle de leurs combinaisons, à condition que certains ajustements soient apportés à la conception, comme le reconnaîtra l'homme du métier. En particulier, en fonction de la quantité de matière première co-transformée, l'invention est susceptible d'inclure une étape d'élimination de soufre telle qu'un traitement par amines ou un adsorbant de piégeage du soufre dans la section de récupération de fractions légères en plus de la pré-colonne de protection contre le soufre qui est utilisée pour protéger l'unité de production de H2. En effet, le catalyseur utilisé en reformage du méthane à la vapeur (SMR) ou dans d'autres technologies exige de faibles quantités de H2S dans le courant d'alimentation. La teneur en matière première biologique prétraitée peut être comprise entre 100 et 50 % du courant d'alimentation total, préférentiellement entre 99 et 60 %, plus préférentiellement entre 95 et 60 % en poids, plus préférentiellement entre 93 et 80 % en poids du courant d'alimentation total. Ces intervalles sont optimaux pour pouvoir utiliser le propane produit, plus spécifiquement pendant l'hydrotraitement de la matière première biologique.

Cependant, dans un mode de réalisation de l'invention dans lequel l'hydroraffinage du courant d'alimentation compatible produit des quantités significatives de fractions légères, il pourrait être intéressant de co-transformer plus de 50 % du courant d'alimentation combiné et jusqu'à 90 % de celui-ci. L'un des exemples de ce mode de réalisation serait le cas où le courant d'alimentation compatible se compose d'hydrocarbures dans la plage d'ébullition de la VGO et la zone d'hydroraffinage inclut un catalyseur d'hydrocraquage. Comme décrit dans la littérature, la transformation par hydrocraquage de composants hydrocarbonés produit une quantité significative de composants hydrocarbonés de type fractions légères. Ce mode de réalisation de l'invention permet ensuite à ces composants de type fractions légères d'être récupérés pour compléter le propane bio-dérivé dans la production d'hydrogène.

Bien que cela ne soit pas illustré, il utilise une « étape de génération d'hydrogène » telle qu'un reformage du méthane à la vapeur (SMR), un reformage autotherme ou une oxydation partielle. Cette zone inclut souvent une pré-colonne de protection contre le soufre en amont de l'étape de génération d'hydrogène et une étape de purification d'hydrogène en aval de l'étape de génération d'hydrogène. De plus, l'étape de purification d'hydrogène utilise en général l'adsorption par inversion de pression (PSA) mais peut également employer d'autres moyens comme l'absorption par amines, la méthanation, etc. Bien que le demandeur se réfère au reformage à la vapeur dans la présente description, toute technologie de production d'hydrogène connue de l'homme du métier pourrait être déployée dans le même but.

Dans l'étape d'hydrotraitement, l'hydrogène issu du courant d'hydrogène 16 est ajouté pour saturer les doubles liaisons des triglycérides d'huile végétale insaturés issus de la matière première biologique 11 et éliminer le squelette propane, convertissant ainsi les triglycérides d'huile végétale saturés en acides gras. Enfin, les acides gras subissent soit une hydrodésoxygénation (par ajout d'une quantité supplémentaire d'hydrogène, l'oxygène s'échappe sous forme de H₂O), soit une décarboxylation (l'oxygène s'échappe sous forme de CO₂ sans ajout supplémentaire d'hydrogène), soit une combinaison des deux. Il en résulte un courant d'effluent d'hydroraffinage liquide 18 comprenant un mélange d'hydrocarbures paraffiniques et de fractions légères. Cette étape d'hydrotraitement dans la zone d'hydroraffinage 17 utilise un catalyseur solide pour catalyser les réactions d'hydrotraitement.

Les catalyseurs décrits la littérature utilisent souvent des métaux du groupe VIII comme le nickel ou le cobalt seuls ou en combinaison avec des métaux du groupe VIB comme le molybdène ou le tungstène. Les types de catalyseur largement décrits dans la littérature incluent les formes sulfurées de NiMo, CoMo et NiW sur un support d'alumine ainsi que le nickel réduit. **En** fonction de la matière première biologique spécifiquement considérée, la réaction se déroule typiquement à des températures réactionnelles généralement comprise entre 180 °C et 400 °C, une pression entre 10 bar et 150 bar et une VSHL comprise entre 0,1 et 10 h⁻¹.

La zone d'hydroraffinage 17 peut également inclure un catalyseur qui permet aux hydrocarbures paraffiniques à chaîne linéaire de subir une isomérisation des alcanes et un craquage après les réactions d'hydrotraitement. Le catalyseur d'isomérisation/craquage peut également être présent à un étage indépendant des réactions d'hydrotraitement ou partager un étage avec les réactions d'hydrotraitement. Dans les scénarios dans lesquels la zone d'hydroraffinage 17 inclut une étape d'isomérisation/hydrocraquage, le courant d'effluent d'hydroraffinage 18 comprend l'effluent liquide issu de l'étape d'isomérisation/hydrocraquage.

La zone d'hydroraffinage 17 peut inclure un équipement permettant à l'excès d'hydrogène et/ou d'effluent liquide dans le ou les réacteurs d'être recyclé et de revenir dans la ou les cuves de réaction. La zone d'hydroraffinage peut également séparer sélectivement le dioxyde de carbone de l'effluent de réacteur à l'aide de techniques telles que l'absorption par amines ou la séparation sur membrane.

Le courant d'effluent d'hydroraffinage liquide 18 comprenant un mélange d'hydrocarbures paraffiniques est ensuite introduit en même temps qu'un fluide de désorption d'hydrocarbures légers 10a dans une zone de récupération de fractions légères 19. La zone de récupération de fractions légères peut utiliser un contacteur à étage unique, mais utilisera typiquement un réceptacle unique à plusieurs étages, tel qu'une colonne de distillation.

La zone de récupération de fractions légères 19 de l'invention du demandeur fonctionne à pression élevée, et le fluide de désorption d'hydrocarbures légers 10a qui sert à éliminer le propane de l'effluent liquide du réacteur d'hydroraffinage est également adapté et utilisé comme courant d'alimentation pour la zone de production d'hydrogène, comme détaillé plus loin dans la présente invention. Le fluide de désorption d'hydrocarbures légers 10a est typiquement un courant de vapeur principalement composé d'hydrocarbures légers tels que le méthane ou le gaz naturel.

Bien que cela ne soit pas illustré sur la Figure 1, il est également possible d'obtenir le fluide de désorption d'hydrocarbures légers à partir d'une autre source renouvelable, comme par exemple un gaz léger issu d'une unité de pyrolyse de biomasse ou d'une unité de digestion de gaz ou d'une unité de pyrolyse de déchets et/ou de plastiques ou de toute autre unité de transformation d'une matière première renouvelable.

L'utilisation du même fluide de désorption d'hydrocarbures légers en tant que courant d'alimentation dans la zone de production d'hydrogène 15 est avantageuse en ce qu'il doit être présent à une pression modérée pour pouvoir entrer dans le système de production d'hydrogène, tel qu'un vaporeformeur.

Ainsi, son utilisation comme fluide de désorption dans la zone de récupération de fractions légères 19 lui permet de fonctionner à pression élevée.

Le propane, un sous-produit important des réactions d'hydrotraitement, constitue une matière première adaptée à de nombreux procédés de production d'hydrogène. **En** utilisant la zone de récupération de fractions légères, les fractions légères produites dans la zone d'hydroraffinage, à savoir le propane, peuvent être utilisées dans la production d'hydrogène. Ceci permet à l'hydrogène d'être produit au moins en partie à partir d'une matière première renouvelable et de réduire la quantité de matière première devant être importée à partir d'autres sources.

Le courant d'effluent liquide d'hydroraffinage 18 est séparé dans la zone de récupération de fractions légères 19 en un courant de vapeur de fractions légères récupérées 20 et un courant d'effluent liquide dont les gaz ont été désorbés 22. Le courant de fractions légères récupérées 20 comprend généralement du propane, d'autres fractions légères produites dans la zone d'hydroraffinage 17 et des composants du fluide de désorption d'hydrocarbures légers 10a.

Le courant d'effluent liquide dont les gaz ont été désorbés 22 comprend typiquement des hydrocarbures paraffiniques et est donc adapté à une transformation ultérieure par un nombre quelconque de procédés connus de l'homme du métier en produits commercialisables, y compris le carburant diesel, le kérosène, le carburant des avions à réaction, le gasoil et/ou le naphta. Le courant d'effluent liquide dont les gaz ont été désorbés 22 peut également contenir des fractions légères dissoutes issues de la zone de récupération des hydrocarbures légers. Ces fractions légères, après séparation suite à transformation ultérieure, peuvent être utilisées comme gaz combustible.

La zone de production d'hydrogène 15 comprend typiquement une pré-colonne de protection contre le soufre, un vaporeformeur et une section d'adsorption par inversion de pression (PSA) (tous non illustrés). Un courant de purge de zone d'hydroraffinage 14 comprenant de l'hydrogène et d'autres fractions légères est éventuellement envoyé vers la zone de production d'hydrogène 15 en amont de la pré-colonne de protection contre le soufre, du vaporeformeur ou de la PSA. S'ils sont envoyés en amont du vaporeformeur, les hydrocarbures du courant de purge de la zone d'hydroraffinage 14 peuvent être convertis en hydrogène. Le courant de purge de la zone d'hydroraffinage 14 peut être alternativement envoyé à la PSA si la conversion des fractions légères du courant n'est pas requise ; ceci peut être plus souhaitable dans certains cas dans la mesure où le courant est souvent plus riche en hydrogène.

Comme susmentionné, l'utilisation du même fluide de désorption d'hydrocarbures légers 10a en tant que courant d'alimentation de la zone de production d'hydrogène 15 génère de l'efficacité dans le procédé. La Figure 1 illustre le mode de réalisation dans lequel un courant d'alimentation en hydrocarbures légers 10 est utilisé à la fois comme fluide de désorption d'hydrocarbures légers 10a et comme courant d'alimentation de la zone de production d'hydrogène 10b. Le courant d'alimentation de production d'hydrogène 10b est ensuite combiné au courant de fractions légères récupérées 20 et le courant combiné 12 est utilisé comme combustible et envoyé vers la zone de production d'hydrogène 15.

Souvent, le courant d'alimentation de la zone de production d'hydrogène 15, qu'il s'agisse de gaz naturel ou autre, nécessite une compression pour atteindre l'installation. Dans ce scénario, le courant d'alimentation comprimé peut être utilisé comme fluide de désorption comme décrit ci-avant, mais il est également possible d'obtenir un effet similaire en faisant fonctionner la zone de récupération de fractions légères 19 à faible pression avec le gaz du courant d'alimentation en fractions légères 10a à faible pression puis en introduisant en cascade le courant de fractions légères récupérées 20 dans l'étape de compression ; ceci permet au courant de fractions légères récupérées 20 et au courant d'alimentation de la zone de production d'hydrogène 10b de partager un même équipement de compression.

Bien que cela ne soit pas illustré sur la Figure 1, il est également possible d'envoyer tout d'abord le courant d'effluent liquide dont les gaz ont été désorbés 22, avec le courant d'hydrogène 16, vers une étape d'isomérisation ou d'hydrocraquage pour créer les carburants à base de distillats moyens et dans laquelle l'hydrogène en excès non utilisé dans le processus d'isomérisation ou d'hydrocraquage est ensuite introduit en cascade dans la zone d'hydroraffinage 17.

Bien que cela ne soit pas illustré et en fonction des caractéristiques de l'installation particulière considérée, le courant d'alimentation de production d'hydrogène 10b et le fluide de désorption d'hydrocarbures légers 10a peuvent provenir de sources différentes. De plus, et bien que cela ne soit également pas illustré, le courant d'alimentation de production d'hydrogène 10b et le courant de fractions légères récupérées 20 peuvent être envoyés vers la zone de production d'hydrogène 15 sous forme de courants distincts.

Dans certaines applications, il peut être intéressant de récupérer le composant propane du courant de fractions légères récupérées 20 en tant que produit liquide commercialisable. Dans ce cas et bien que cela ne soit pas illustré sur la Figure 1, le courant de fractions légères récupérées 20 peut être envoyé vers une section de récupération de gaz de pétrole liquéfié (GPL).

Le « gaz de pétrole liquéfié ou GPL » se compose généralement de propane, de butane, ou d'un mélange de ceux-ci. La section de récupération de GPL peut récupérer le propane à l'aide de membranes, d'un fractionnement ou d'une quelconque combinaison de ceux-ci. Dans cette étape, le propane liquide commercialisable ou le GPL est éliminé du courant de fractions légères récupérées 20. Le courant de fractions légères récupérées 20 restant, qui comprend des gaz légers tels que le méthane et/ou l'éthane, peut ensuite être utilisé comme courant d'alimentation pour le vaporeformeur ou comme combustible.

L'invention décrite ici a été divulguée en termes de modes de réalisation et d'applications spécifiques. Cependant, ces détails ne sont pas censés être limitants et d'autres modes de réalisation, à la lumière de cette démonstration, seraient évidents aux hommes du métier. Ainsi, il doit être entendu que les dessins et descriptions sont illustratifs des principes de l'invention et ne devraient pas être interprétés comme limitant leur champ d'application.

### Exemple :

La présente invention va être décrite plus avant par l'exemple suivant, qui ne doit pas être interprété comme limitant son champ d'application.

Un courant de matière première biologique prétraitée 11 comprenant de l'huile de soja est transformé dans une unité selon la Figure 1 en même temps qu'un courant d'hydrogène 16 issu d'une zone de production d'hydrogène 15. La zone de production d'hydrogène 15 est une unité de reformage du méthane à la vapeur (SMR).

Les propriétés pertinentes de ce courant d'alimentation sont répertoriées dans le Tableau 1 ci-dessous :

**Tableau 1**

| Source | **unité** | **norme** | **Huile de soja prétraitée** |
|---|---|---|---|
| Densité d15/4 | | D4052/D1298 | 0,923 |
| Composition en acides gras | | NF EN ISO 12966.2 + NF EN ISO 5508 | |
| C14:0 | % en poids | | 0,5 |
| C14:1 | % en poids | | 0,0 |
| C15:0 | % en poids | | 0,0 |
| C16:0 | % en poids | | 10,0 |
| C16:1 | % en poids | | 0,0 |
| C17:0 | % en poids | | 0,0 |
| C17:1 | % en poids | | 0,0 |
| C18:0 | % en poids | | 4,0 |
| C18:1 | % en poids | | 23,0 |
| C18:2 | % en poids | | 53,0 |
| C18:3 | % en poids | | 8,0 |
| C20:0 | % en poids | | 0,5 |
| C20:1 | % en poids | | 0,5 |
| C22:0 | % en poids | | 0,0 |
| C22:1 | % en poids | | 0,5 |
| Composition en glycérides | | NF EN ISO 12966.2 + NF EN ISO 5508 | |
| Acides gras libres | % en poids | | 0,5 |
| Monoglycérides | % en poids | | 0,0 |
| Diglycérides | % en poids | | 0,0 |
| Triglycérides | % en poids | | 99,5 |
| Ester méthylique d'acide gras | % en poids | | 0,0 |
| Total | % en poids | | 100,0 |
| Soufre FX ou UV | ppm en poids | D2622/D5453 | 10 |
| Azote total | ppm en poids | D4629/D5762 | 20 |
| Phosphore | ppm en poids | D5185 | 3 |
| Métaux | ppm en poids | D5185 | 5 |

Dans l'étape d'hydrotraitement, de l'hydrogène est ajouté pour saturer les doubles liaisons des triglycérides d'huile végétale insaturés issus de la matière première biologique 11 et éliminer le squelette propane, convertissant ainsi les triglycérides d'huile végétale saturés en acides gras. Enfin, les acides gras subissent soit une hydrodésoxygénation (par ajout d'une quantité supplémentaire d'hydrogène, l'oxygène s'échappe sous forme de H₂O), soit une décarboxylation (l'oxygène s'échappe sous forme de CO₂ sans ajout supplémentaire d'hydrogène), soit une combinaison des deux. Il en résulte un courant d'effluent d'hydroraffinage liquide 18 comprenant un mélange d'hydrocarbures paraffiniques et de fractions légères.

Cette étape d'hydrotraitement dans la zone d'hydroraffinage 17 utilise un catalyseur de NiMo sulfuré sur un support d'alumine. Le catalyseur se compose de 4 % en poids de nickel et de 14 % en poids de molybdène.

Le Tableau 2 ci-dessous présente les conditions opératoires de l'unité d'hydrotraitement :

**Tableau 2**

| Conditions opératoires | | Selon l'invention | Art antérieur utilisant une purge de propane à pression élevée | Art antérieur utilisant une purge de propane à pression faible |
|---|---|---|---|---|
| Pression du réacteur | MPa | 10,6 | 10,6 | 10,6 |
| WABT (HDO / HDT) | °C | 340 | 343 | 343 |
| VSHL catalyseur HDO / HDT | h⁻¹ | 0,25 | 0,25 | 0,25 |

La zone d'hydroraffinage 17 n'inclut pas de séparation sélective du dioxyde de carbone d'avec l'effluent de réacteur.

Le courant d'effluent d'hydroraffinage liquide 18 comprenant un mélange d'hydrocarbures paraffiniques est ensuite introduit en même temps qu'un fluide de désorption d'hydrocarbures légers 10a dans une zone de récupération de fractions légères 19. La zone de récupération de fractions légères utilise une colonne de distillation fonctionnant à pression élevée (3 MPa), et le fluide de désorption d'hydrocarbures légers 10a qui sert à éliminer le propane de l'effluent liquide du réacteur d'hydroraffinage est utilisé comme courant d'alimentation pour la zone de production d'hydrogène. Le fluide de désorption d'hydrocarbures légers 10a est un courant de vapeur composé d'hydrocarbures légers avec une composition présentée dans le Tableau 3 ci-dessous.

**Tableau 3**

| **Type** | | **Unité** | **Hydrocarbures légers** |
|---|---|---|---|
| Composition | | % en vol | |
| | Méthane | | 95,00 |
| | Éthane | | 2,78 |
| | Propane | | 0,31 |
| | Butane | | 0,10 |
| | C₅+ | | 0,01 |
| | Azote | | 0,75 |
| | Dioxyde de carbone | | 1,05 |
| Teneur en soufre | | mg/m³ | 5,5 |
| VHL | | MJ/m³ | 34,3 |

Le courant d'effluent liquide d'hydroraffinage 18 est séparé dans la zone de récupération de fractions légères 19 en un courant de vapeur de fractions légères récupérées 20 et un courant d'effluent liquide dont les gaz ont été désorbés 22. Le courant de fractions légères récupérées 20 comprend du propane, d'autres fractions légères produites dans la zone d'hydroraffinage 17 et des composants dans le fluide de désorption d'hydrocarbures légers 10a.

Le Tableau 4 présente les rendements en produits selon l'invention et l'art antérieur :

**Tableau 4**

| Rendements en produits | | Selon l'invention | Art antérieur utilisant une purge de propane à pression élevée | Art antérieur utilisant une purge de propane à pression faible |
|---|---|---|---|---|
| Hydroraffinage purge de H₂ vers SMR | Kg/h | 530 | 1033 | 530 |
| Hydroraffinage pertes de H₂ vers combustible | Kg/h | 44 | 84 | 44 |
| Propane vers génération de H₂ | Kg/h | 3534 | 2584 | 983 |
| Équivalents d'économies de H₂ | Kg/h | 1041 | 64 | -126 |
| HC légers pour désorption | Kg/h | 1000 | - | - |
| Vapeur d'eau pour désorption | Kg/h | - | 1200 | 1200 |

Le propane est envoyé dans l'unité de SMR avec les fractions légères de la zone de récupération. Ceci permet de produire l'hydrogène, au moins en partie, à partir d'une matière première renouvelable et de réduire dans le même temps la matière première importée dans l'unité de SMR. L'hydrogène issu de la section d'hydroraffinage qui est purgé dans le SMR dans les schémas de l'art antérieur nécessite une consommation supplémentaire de combustible et une capacité hydraulique pour le SMR sans contribuer favorablement à la production d'hydrogène. Une purge importante d'hydrogène vers le SMR représente ainsi une inefficacité significative du procédé. En effet, conformément au tableau 4, le H₂ purgé de la section d'hydroraffinage vers le SMR est réduit de 50 % en poids et le propane peut être récupéré et dirigé vers le SMR sans compression supplémentaire. De cette façon, la présente invention permet de fournir les avantages d'une élimination de propane à pression élevée comme à pression faible, sans présenter les inefficacités majeures de l'une ou l'autre des options. Ceci peut être grossièrement quantifié par les « équivalents d'économies de H2 » qui représentent la différence entre la capacité de production stœchiométrique d'hydrogène du propane envoyé vers le SMR et la somme du H₂ purgé vers le SMR et perdu en combustible.

À la lumière de ce qui précède, le schéma de transformation selon l'invention est plus efficient et utilise le propane généré par l'hydroraffinage de matières premières biologiques dans la fabrication de distillats moyens.

## Revendications

1. Procédé d'hydroraffinage de matières premières biologiques comprenant :
a) l'introduction d'une matière première biologique prétraitée et d'un courant d'hydrogène (16) dans une zone d'hydroraffinage (17) qui utilise au moins un catalyseur solide pour catalyser des réactions d'hydrotraitement et produire un effluent liquide (18) d'hydroraffinage ;
b) l'introduction dudit effluent liquide (18) d'hydroraffinage et d'un fluide (10a) de désorption d'hydrocarbures légers dans une zone (19) de récupération de fractions légères, ledit fluide (10a) de désorption d'hydrocarbures légers étant mis en contact avec ledit effluent liquide (18) d'hydroraffinage pour créer un courant (20) de fractions légères récupérées et un courant (22) d'effluent liquide dont les gaz ont été désorbés ; et
c) l'introduction d'un courant d'alimentation combinant ledit courant (20) de fractions légères récupérées et un courant (10b) du même fluide de désorption (10) d'hydrocarbures légers qu'à l'étape a) dans une zone (15) de production d'hydrogène, ladite zone de production d'hydrogène utilisant les hydrocarbures présents dans ledit courant (20) de fractions légères récupérées comme matière première pour créer
au moins une partie dudit courant d'hydrogène (16) utilisé dans l'étape (a), ou
pour créer un courant d'effluent vapeur riche en hydrogène, le procédé comprenant en outre les étapes d) et e) suivantes:.
d) l'introduction dudit courant (22) d'effluent liquide dont les gaz ont été désorbés dans une zone d'hydroraffinage secondaire qui utilise au moins un catalyseur solide secondaire pour catalyser des réactions d'hydroraffinage supplémentaires pour produire un effluent liquide d'hydroraffinage secondaire ;
e) l'introduction dudit courant d'effluent vapeur riche en hydrogène dans ladite zone d'hydroraffinage secondaire ; puis l'introduction de l'hydrogène en excès issu de ladite zone d'hydroraffinage secondaire en cascade dans ladite zone d'hydroraffinage (17).

2. Procédé selon la revendication 1, dans lequel l'étape c) crée au moins une partie dudit courant d'hydrogène (16) utilisé dans l'étape (a) et ledit courant (22) d'effluent liquide dont les gaz ont été désorbés est ensuite transformé plus avant pour la fabrication de carburants hydrocarbonés à base de distillats moyens à l'aide d'un ou plusieurs procédés choisis dans le groupe constitué par l'élimination des gaz dissous, le fractionnement du produit liquide, une étape de réaction d'isomérisation et/ou une étape de réaction d'hydrocraquage.

3. Procédé selon la revendication 1, dans lequel l'étape c) crée au moins une partie dudit courant d'hydrogène (16) utilisé dans l'étape (a) et ledit courant (22) d'effluent liquide dont les gaz ont été désorbés est ensuite transformé plus avant pour la fabrication de carburants hydrocarbonés à base de distillats moyens à l'aide d'une étape d'isomérisation, dans lequel ladite étape d'isomérisation crée un courant d'effluent vapeur riche en hydrogène et dans lequel ledit effluent vapeur riche en hydrogène est ensuite introduit en retour en cascade dans ladite zone d'hydroraffinage.

4. Procédé selon la revendication 1, dans lequel l'étape c) crée au moins une partie dudit courant d'hydrogène (16) utilisé dans l'étape (a) et ledit courant (22) d'effluent liquide dont les gaz ont été désorbés est ensuite transformé plus avant pour la fabrication de carburants hydrocarbonés à base de distillats moyens à l'aide d'une étape d'hydrocraquage, dans lequel ladite étape d'hydrocraquage crée un courant d'effluent vapeur riche en hydrogène et dans lequel ledit effluent vapeur riche en hydrogène est ensuite introduit en retour en cascade dans ladite zone d'hydroraffinage.

5. Procédé selon l'une quelconque des revendications précédentes, dans lequel ladite zone (19) de récupération de fractions légères fonctionne à une pression supérieure à 5 bars.

6. Procédé selon l'une quelconque des revendications précédentes, dans lequel ladite zone (17) d'hydroraffinage de l'étape a) produit un effluent vapeur et dans lequel ledit effluent vapeur est séparé plus avant en un courant enrichi en hydrocarbures et un courant enrichi en hydrogène, et dans lequel ledit courant enrichi en hydrocarbures est ensuite mélangé audit courant de fractions légères récupérées et dans lequel ledit courant enrichi en hydrogène et le mélange dudit courant enrichi en hydrocarbures et dudit courant de fractions légères récupérées sont envoyés séparément vers ladite zone (15) de production d'hydrogène.

7. Procédé selon l'une quelconque des revendications précédentes, dans lequel une partie dudit courant d'hydrogène créé à l'étape c) est utilisée dans l'hydroraffinage à l'extérieur de ladite zone d'hydroraffinage.

8. Procédé selon l'une quelconque des revendications précédentes, dans lequel au moins une partie dudit hydrogène issu de ladite zone (15) de production d'hydrogène est envoyée vers une étape d'isomérisation avant d'introduire en cascade l'hydrogène en excès dans la zone d'hydroraffinage et dans lequel l'effluent liquide (22) dont les gaz ont été désorbés est transformé plus avant dans ladite étape d'isomérisation pour la fabrication de carburants hydrocarbonés à base de distillats moyens.

9. Procédé selon l'une quelconque des revendications précédentes, dans lequel ledit fluide (10a) de désorption d'hydrocarbures légers est un courant comprenant du méthane, de l'éthane, du gaz naturel, du gaz combustible, un produit léger de déséthaniseur, un produit léger de déméthaniseur, un courant obtenu à partir d'une autre source renouvelable, un gaz léger issu d'une unité de pyrolyse de biomasse ou d'une unité de digestion de gaz ou d'une unité de pyrolyse de déchets et/ou de plastiques ou de toute autre unité de transformation d'une matière première renouvelable, ou des mélanges de ceux-ci.

10. Procédé selon l'une quelconque des revendications précédentes, dans lequel ladite zone d'hydroraffinage (17) inclut une étape d'hydrotraitement et une étape d'isomérisation et éventuellement la zone d'hydroraffinage secondaire inclut une étape d'isomérisation.

11. Procédé selon la revendication précédente, dans lequel ladite étape d'isomérisation utilise au moins un catalyseur d'isomérisation solide qui est différent dudit catalyseur solide d'hydrotraitement.

12. Procédé selon l'une quelconque des revendications précédentes, dans lequel ledit hydroraffinage inclut une étape d'hydrotraitement et une étape d'isomérisation et dans lequel il y a une étape de séparation inter-étage entre ladite étape d'hydrotraitement et ladite étape d'isomérisation dans laquelle les gaz légers sont séparés desdits carburants hydrocarbonés à base de distillats moyens.

13. Procédé selon l'une quelconque des revendications précédentes, dans lequel ledit courant (20) de fractions légères récupérées est mélangé à un courant d'alimentation supplémentaire (10b) avant l'introduction dans ladite zone (15) de production d'hydrogène.

14. Procédé selon l'une quelconque des revendications précédentes dans lequel ladite matière première biologique est choisie dans le groupe comprenant : l'huile de colza, l'huile de soja, l'huile de maïs, l'huile de noix de coco, l'huile d'olive, l'huile de lin, l'huile de tournesol, l'huile de palme, l'huile de jatropha, l'huile de moutarde, l'huile d'arachide, l'huile de chanvre, l'huile de coton, la matière grasse de porc, la matière grasse de volaille, le saindoux, le beurre, le suif, ou n'importe laquelle de leurs combinaisons.

15. Procédé selon la revendication 1, dans lequel l'étape c) crée un courant d'effluent vapeur riche en hydrogène et ledit courant d'effluent liquide d'hydroraffinage secondaire est ensuite transformé plus avant pour la fabrication de carburants hydrocarbonés à base de distillats moyens à l'aide d'un ou de plusieurs procédés choisis dans le groupe constitué par l'élimination des gaz dissous et/ou le fractionnement du produit liquide.

16. Procédé selon la revendication 1, dans lequel l'étape c) crée un courant d'effluent vapeur riche en hydrogène et ladite zone de récupération de fractions légères inclut une étape d'élimination des gaz dissous dans laquelle les gaz légers sont séparés desdits carburants hydrocarbonés à base de distillats moyens après la mise en contact de l'effluent liquide d'hydroraffinage avec le fluide de désorption d'hydrocarbures légers.

17. Procédé selon l'une quelconque des revendications précédentes, dans lequel ladite matière première biologique est dans un mélange ou un courant d'alimentation combiné avec une matière première à base d'hydrocarbures de pétrole, et la matière première à base d'hydrocarbures de pétrole est cotransformée avec ladite matière première biologique, éventuellement dans lequel la matière première à base d'hydrocarbures de pétrole est choisie dans le groupe comprenant la LCO (huile légère de recyclage), le diesel, le kérosène, la HCGO, la LCGO, la VGO ou l'huile de pyrolyse ou n'importe laquelle de leurs combinaisons.

## Patentansprüche

1. Verfahren zur Hydroraffination biologischer Ausgangsmaterialien, umfassend:
a) Einbringen eines vorbehandelten biologischen Ausgangsmaterials und eines Wasserstoffstroms (16) in eine Hydroraffinationszone (17), die mindestens einen festen Katalysator zum Katalysieren von Hydrodesulfurierungsreaktionen und zum Herstellen eines flüssigen Hydroraffinationsabstroms (18) einsetzt,
b) Einbringen des flüssigen Hydroraffinationsabstroms (18) und eines Fluids (10a) aus der Desorption leichter Kohlenwasserstoffe in eine Zone (19) zur Rückgewinnung leichter Fraktionen, wobei das Fluid (10a) aus der Desorption leichter Kohlenwasserstoffe mit dem flüssigen Hydroraffinationsabstrom (18) in Kontakt gebracht wird, um einen Strom (20) rückgewonnener leichter Fraktionen und einen flüssigen Abstrom (22) herzustellen, aus dem die Gase desorbiert sind, und
c) Einbringen eines Beschickungsstroms, in dem der Strom (20) rückgewonnener leichter Fraktionen und ein Strom (10b) desselben Fluids aus der Desorption (10) leichter Kohlenwasserstoffe wie im Schritt a) vereinigt sind, in eine Wasserstoffproduktionszone (15), wobei die Wasserstoffproduktionszone die in dem Strom (20) rückgewonnener leichter Fraktionen vorhandenen Kohlenwasserstoffe als Ausgangsmaterial zum Erzeugen mindestens eines Teils des in Schritt (a) verwendeten Wasserstoffstroms (16) oder zum Erzeugen eines wasserstoffreichen Dampfabstroms verwendet, wobei das Verfahren ferner die folgenden Schritte d) und e) umfasst:
d) Einbringen des flüssigen Abstroms (22), aus dem die Gase desorbiert sind, in eine sekundäre Hydroraffinationszone, die mindestens einen sekundären festen Katalysator zum Katalysieren zusätzlicher Hydroraffinationsreaktionen verwendet, so dass ein sekundärer flüssiger Hydroraffinationsabstrom hergestellt wird,
e) Einbringen des wasserstoffreichen Dampfabstroms in die sekundäre Hydroraffinationszone, danach kaskadenförmiges Einbringen von aus der sekundären Hydroraffinationszone stammendem Wasserstoff im Überschuss in die Hydroraffinationszone (17).

2. Verfahren nach Anspruch 1, wobei Schritt c) mindestens einen Teil des im Schritt (a) verwendeten Wasserstoffstroms (16) erzeugt und der flüssige Abstrom (22), aus dem die Gase desorbiert sind, anschließend zur Herstellung von Kohlenwasserstoffbrennstoffen auf der Basis von Mitteldestillaten mithilfe eines oder mehrerer Verfahren, ausgewählt aus der Gruppe, bestehend aus der Beseitigung gelöster Gase, der Fraktionierung des flüssigen Produkts, einem Isomerisierungsreaktionsschritt und/oder einem Hydrocrackingreaktionsschritt, noch weiter umgewandelt wird.

3. Verfahren nach Anspruch 1, wobei Schritt c) mindestens einen Teil des in Schritt (a) verwendeten Wasserstoffstroms (16) erzeugt und der flüssige Abstrom (22), aus dem die Gase desorbiert sind, anschließend zur Herstellung von Kohlenwasserstoffbrennstoffen auf der Basis von Mitteldestillaten mithilfe eines Isomerisierungsschritts weiter umgewandelt wird, wobei der Isomerisierungsschritt einen wasserstoffreichen Dampfabstrom erzeugt und wobei der wasserstoffreiche Dampfabstrom anschließend wieder in die Hydroraffinationszone zurück kaskadiert wird.

4. Verfahren nach Anspruch 1, wobei Schritt c) mindestens einen Teil des in Schritt (a) verwendeten Wasserstoffstroms (16) erzeugt und der flüssige Abstrom (22), aus dem die Gase desorbiert sind, anschließend zur Herstellung von Kohlenwasserstoffbrennstoffen auf der Basis von Mitteldestillaten mithilfe eines Hydrocrackingschritts weiter umgewandelt wird, wobei der Hydrocrackingschritt einen wasserstoffreichen Dampfabstrom erzeugt und der wasserstoffreiche Dampfabstrom anschließend wieder in die Hydroraffinationszone zurück kaskadiert wird.

5. Verfahren nach einem der vorhergehenden Ansprüche, wobei die Zone (19) zur Rückgewinnung leichter Fraktionen bei einem Druck von mehr als 5 bar arbeitet.

6. Verfahren nach einem der vorhergehenden Ansprüche, wobei die Hydroraffinationszone (17) von Schritt a) einen Dampfabstrom erzeugt und wobei der Dampfabstrom noch weiter in einen an Kohlenwasserstoffen angereicherten Strom und einen an Wasserstoff angereicherten Strom getrennt wird und wobei der an Kohlenwasserstoffen angereicherte Strom anschließend mit dem Strom der zurückgewonnenen leichten Fraktionen gemischt wird und wobei der an Wasserstoff angereicherte Strom und das Gemisch des an Kohlenwasserstoffen angereicherten Stroms und des Stroms der zurückgewonnenen leichten Fraktionen getrennt zur Wasserstoffproduktionszone (15) geleitet werden.

7. Verfahren nach einem der vorhergehenden Ansprüche, wobei ein Teil des in Schritt c) erzeugten Wasserstoffstroms beim Hydroraffinieren außerhalb der Hydroraffinationszone verwendet wird.

8. Verfahren nach einem der vorhergehenden Ansprüche, wobei mindestens ein Teil des aus der Wasserstoffproduktionszone (15) stammenden Wasserstoffs einem Isomerisierungsschritt zugeführt wird, bevor Wasserstoff im Überschuss in die Hydroraffinationszone kaskadiert wird, und wobei der flüssige Abstrom (22), aus dem die Gase desorbiert sind, im Isomerisierungsschritt zur Herstellung von Kohlenwasserstoffbrennstoffen auf der Basis von Mitteldestillaten noch weiter umgewandelt wird.

9. Verfahren nach einem der vorhergehenden Ansprüche, wobei das Fluid (10a) aus der Desorption leichter Kohlenwasserstoffe ein Strom ist, der Methan, Ethan, Erdgas, Brenngas, ein leichtes Deethanisiererprodukt, ein leichtes Demethanisiererprodukt, einen aus einer anderen erneuerbaren Quelle erhaltenen Strom, ein aus einer Biomassepyrolyseanlage oder einer Gasvergärungsanlage oder einer Abfall- und/oder Kunststoffpyrolyseanlage oder einer beliebigen anderen Anlage zur Umwandlung eines erneuerbaren Ausgangsmaterials oder Gemischen von diesen stammendes leichtes Gas umfasst.

10. Verfahren nach einem der vorhergehenden Ansprüche, wobei die Hydroraffinationszone (17) einen Hydrodesulfurierungsschritt und einen Isomerisierungsschritt einschließt und gegebenenfalls die sekundäre Hydroraffinationszone einen Isomerisierungsschritt einschließt.

11. Verfahren nach dem vorhergehenden Anspruch, wobei der Isomerisierungsschritt mindestens einen festen Isomerisierungskatalysator verwendet, der von dem festen Hydrodesulfurierungskatalysator verschieden ist.

12. Verfahren nach einem der vorhergehenden Ansprüche, wobei die Hydroraffination einen Hydrodesulfurierungsschritt und einen Isomerisierungsschritt einschließt und wobei es zwischen dem Hydrodesulfurierungsschritt und dem Isomerisierungsschritt einen zwischengeschalteten Trennschritt gibt, in dem die leichten Gase von den Kohlenwasserstoffbrennstoffen auf der Basis von Mitteldestillaten abgetrennt werden.

13. Verfahren nach einem der vorhergehenden Ansprüche, wobei der Strom (20) zurückgewonnener leichter Fraktionen vor dem Einbringen in die Wasserstoffproduktionszone (15) mit einem zusätzlichen Beschickungsstrom (10b) gemischt wird.

14. Verfahren nach einem der vorhergehenden Ansprüche, wobei das biologische Ausgangsmaterial aus der Gruppe ausgewählt ist, umfassend: Rapsöl, Sojaöl, Maisöl, Kokosnussöl, Olivenöl, Leinöl, Sonnenblumenöl, Palmöl, Jatrophaöl, Senföl, Erdnussöl, Hanföl, Baumwollöl, Schweinefett, Geflügelfett, Schmalz, Butter, Talg oder eine beliebige ihrer Kombinationen.

15. Verfahren nach Anspruch 1, wobei Schritt c) einen wasserstoffreichen Abstrom erzeugt und der flüssige Abstrom der sekundären Hydroraffination anschließend zur Herstellung von Kohlenwasserstoffbrennstoffen auf der Basis von Mitteldestillaten mithilfe eines oder mehrerer Verfahren, ausgewählt aus der Gruppe, bestehend aus der Beseitigung gelöster Gase und/oder der Fraktionierung des flüssigen Produkts, noch weiter umgewandelt wird.

16. Verfahren nach Anspruch 1, wobei Schritt c) einen wasserstoffreichen Dampfabstrom erzeugt und die Zone der Rückgewinnung leichter Fraktionen einen Schritt der Beseitigung gelöster Gase einschließt, in dem nach dem Inkontaktbringen des flüssigen Hydroraffinationsabstroms mit dem Fluid aus der Desorption leichter Kohlenwasserstoffe die leichten Gase von den Kohlenwasserstoffbrennstoffen auf der Basis von Mitteldestillaten abgetrennt werden.

17. Verfahren nach einem der vorhergehenden Ansprüche, wobei das biologische Ausgangsmaterial in einem Gemisch oder einem Beschickungsstrom vorliegt, der mit einem Ausgangsmaterial auf der Basis von Erdölkohlenwasserstoffen vereinigt ist, und das Ausgangsmaterial auf der Basis von Erdölkohlenwasserstoffen zusammen mit dem biologischen Ausgangsmaterial umgewandelt wird, wobei gegebenenfalls das Ausgangsmaterial auf der Basis von Erdölkohlenwasserstoffen aus der Gruppe ausgewählt ist, die LCO (Light Recycling Oil, dtsch.: leichtes Kreislauföl), Diesel, Kerosin, HCGO, LCGO, VGO oder Pyrolyseöl oder eine beliebige ihrer Kombination umfasst.

## Claims

1. Process for hydrorefining biological feedstocks comprising:
a) introducing a pretreated biological feedstock and a stream of hydrogen (16) into a hydrorefining zone (17) that uses at least one solid catalyst to catalyse hydrotreating reactions and to produce a liquid hydrorefining outflow (18);
b) introducing said liquid hydrorefining outflow (18) and a light-hydrocarbons-stripping fluid (10a) into a light-ends recovery zone (19), wherein said light-hydrocarbons-stripping fluid (10a) is contacted with said liquid hydrorefining outflow (18) to create a recovered light ends stream (20) and a gas-stripped liquid outflow stream (22); and
c) introducing a feed stream combining said recovered light ends stream (20) and a stream (10b) of the same light-hydrocarbons-stripping fluid (10) as in step a) into a hydrogen production zone (15), said hydrogen production zone using the hydrocarbons present in said recovered light ends stream (20) as feedstock to create at least a portion of said hydrogen stream (16) used in step (a), or to create a hydrogen-rich vapour outflow stream, the process further comprising the following steps d) and e) :
d) introducing said gas-stripped liquid outflow stream (22) into a secondary hydrorefining zone that uses at least one secondary solid catalyst to catalyse additional hydrorefining reactions to produce a secondary liquid hydrorefining outflow;
e) introducing said hydrogen-rich vapour outflow stream into said secondary hydrorefining zone; then cascading excess hydrogen from said secondary hydrorefining zone into said hydrorefining zone (17).

2. Process according to Claim 1, wherein step c) creates at least a portion of said hydrogen stream (16) used in step (a) and said gas-stripped liquid outflow stream (22) is then further processed for the production of middle distillate hydrocarbon fuels by means of one or more processes selected from the group consisting of removal of dissolved gases, liquid product fractionation, an isomerization reaction step and/or a hydrocracking reaction step.

3. Process according to Claim 1, wherein step c) creates at least a portion of said hydrogen stream (16) used in step (a) and said gas-stripped liquid outflow stream (22) is then further processed for the production of middle distillate hydrocarbon fuels by means of an isomerization step, wherein said isomerization step creates a hydrogen-rich vapour outflow stream and wherein said hydrogen-rich vapour outflow is then cascaded back into said hydrorefining zone.

4. Process according to Claim 1, wherein step c) creates at least a portion of said hydrogen stream (16) used in step (a) and said gas-stripped liquid outflow stream (22) is then further processed for the production of middle distillate hydrocarbon fuels by means of a hydrocracking step, wherein said hydrocracking step creates a hydrogen-rich vapour outflow stream and wherein said hydrogen-rich vapour outflow is then cascaded back into said hydrorefining zone.

5. Process according to any one of the preceding claims, wherein said light-ends recovery zone (19) is operated at a pressure of greater than 5 bar.

6. Process according to any one of the preceding claims, wherein said hydrorefining zone (17) of step a) produces a vapour outflow and wherein said vapour outflow is further separated into a hydrocarbon-enriched stream and a hydrogen-enriched stream, and wherein said hydrocarbon-enriched stream is then mixed with said recovered light ends stream and wherein said hydrogen-enriched stream and the mixture of said hydrocarbon-enriched stream and said recovered light ends stream are separately sent to said hydrogen production zone (15).

7. Process according to any one of the preceding claims, wherein a portion of said hydrogen stream created in step c) is used in hydrorefining outside said hydrorefining zone.

8. Process according to any one of the preceding claims, wherein at least a portion of said hydrogen from said hydrogen production zone (15) is sent to an isomerization step prior to cascading excess hydrogen into the hydrorefining zone and wherein the gas-stripped liquid outflow (22) is further processed in said isomerization step for the production of middle distillate hydrocarbon fuels.

9. Process according to any one of the preceding claims, wherein said light-hydrocarbons-stripping fluid (10a) is a stream comprising methane, ethane, natural gas, fuel gas, light deethanizer product, light demethanizer product, a stream obtained from another renewable source, a light gas from a biomass pyrolysis unit or a gas digestion unit or a waste and/or plastics pyrolysis unit or any other renewable feedstock processing unit, or mixtures thereof.

10. Process according to any one of the preceding claims, wherein said hydrorefining zone (17) includes a hydrotreating step and an isomerization step and optionally the secondary hydrorefining zone includes an isomerization step.

11. Process according to the preceding claim, wherein said isomerization step uses at least one solid isomerization catalyst that is different from said solid hydrotreating catalyst.

12. Process according to any one of the preceding claims, wherein said hydrorefining includes a hydrotreating step and an isomerization step and wherein there is an interstage separation step between said hydrotreating step and said isomerization step in which light gases are separated from said middle distillate hydrocarbon fuels.

13. Process according to any one of the preceding claims, wherein said recovered light ends stream (20) is mixed with an additional feed stream (10b) prior to introduction into said hydrogen production zone (15).

14. Process according to any one of the preceding claims, wherein said biological feedstock is selected from the group consisting of: rapeseed oil, soybean oil, corn oil, coconut oil, olive oil, linseed oil, sunflower oil, palm oil, jatropha oil, mustard oil, peanut oil, hemp oil, cottonseed oil, pork fat, poultry fat, lard, butter, tallow, or any combination thereof.

15. Process according to Claim 1, wherein step c) creates a hydrogen-rich vapour outflow stream and said secondary liquid hydrorefining outflow stream is then further processed for the production of middle distillate hydrocarbon fuels by means of one or more processes selected from the group consisting of removal of dissolved gases and/or liquid product fractionation.

16. Process according to Claim 1, wherein step c) creates a hydrogen-rich vapour outflow stream and said light-ends recovery zone includes a step of removal of dissolved gases in which light gases are separated from said middle distillate hydrocarbon fuels after contacting the liquid hydrorefining outflow with the light-hydrocarbons-stripping fluid.

17. Process according to any one of the preceding claims, wherein said biological feedstock is in a mixture or a feed stream combined with a petroleum hydrocarbon feedstock, and the petroleum hydrocarbon feedstock is co-processed with said biological feedstock, optionally wherein the petroleum hydrocarbon feedstock is selected from the group consisting of LCO (light cycle oil), diesel, kerosene, HCGO, LCGO, VGO or pyrolysis oil or any combination thereof.
